**Europäisches Patentamt**

**European Patent Office**

**Office européen des brevets**

(19)

(11) Numéro de publication: **0 282 427 B1**

(12) **FASCICULE DE BREVET EUROPEEN**

(45) Date de publication du fascicule du brevet: **09.01.91**

(51) Int. Cl.⁵: **B 23 P 21/00, B 23 Q 7/14**

(21) Numéro de dépôt: **88440017.7**

(22) Date de dépôt: **10.03.88**

(54) Dipositif d'assemblage des différentes pièces d'un élément de ferrure.

(30) Priorité: **12.03.87 FR 8703598**

(43) Date de publication de la demande:
**14.09.88 Bulletin 88/37**

(45) Mention de la délivrance du brevet:
**09.01.91 Bulletin 91/02**

(84) Etats contractants désignés:
**AT BE CH DE ES GB IT LI LU NL SE**

(56) Documents cités:
**DE-A-3 412 441**
**DE-A-3 508 459**
**FR-A-2 589 933**

(73) Titulaire: **FERCO INTERNATIONAL Usine de Ferrures de Bâtiment Société à responsabilité limitée**
**2, rue du Vieux-Moulin Reding**
**F-57400 Sarrebourg (FR)**

(72) Inventeur: **Kautt, Jean-Jacques**
**24, rue Pertois**
**F-67000 Strasbourg (FR)**

(74) Mandataire: **Aubertin, François**
**Cabinet Lepage & Aubertin Innovations et Prestations 4, rue de Haguenau**
**F-67000 Strasbourg (FR)**

Courier Press, Leamington Spa, England.

## Description

L'invention concerne un dispositif d'assemblage des différentes pièces d'un élément de ferrure tel qu'un bras de compas comprenant, pour chaque pièce à assembler, au moins un poste d'assemblage, un transporteur avançant pas à pas et pourvu d'au moins un convoyeur présentant le plan longitudinal du bras de compas perpendiculairement à la ligne d'avancement dudit transporteur et des moyens de déplacement latéral du bras de compas pour conférer à ce dernier un parcours bidirectionnel.

On connaît déjà, par le document DE—A—2 654 173, une installation de transfert pour l'usinage précis d'éléments de grande longueur tels que des tubes. Cette installation comporte un dispositif de chargement déposant un à un les tubes sur un premier moyen de déplacement latéral amenant une des extrémités du tube en face d'un premier dispositif de coupe. A l'aide de deux transbordeurs, le tube est ensuite déposé sur un second moyen de déplacement latéral conférant au tube un déplacement transversal de sens contraire au déplacement transversal précédent pour amener l'autre extrémité du tube en face d'un second dispositif de coupe. Puis, le tube, coupé à ses deux extrémités, est positionné par rapport à un troisième dispositif de coupe situé dans le plan médian de l'installation, de sorte que les deux tronçons de tube présentent une longueur strictement identique. Après cette coupe centrale, chaque tronçon de tube est pris en charge individuellement pour mettre en contact successivement chaque extrémité de chaque tronçon de tube avec des machines d'usinage effectuant soit un débardage, soit un chanfreinage de ladite extrémité ou autre usinage analogue.

Toutefois, il est nécessaire d'arrêter la partie de l'installation située en amont du dispositif de coupe centrale jusqu'à ce que les deux tronçons de tube situés en aval dudit dispositif de coupe centrale soient dégagés. De ce fait, la cadence en amont est différente de celle en aval du dispositif de coupe centrale alors qu'il est souhaitable que la cadence soit uniforme pour rentabiliser au mieux cette installation.

Par un état de la technique interne on connaît une installation d'assemblage des différentes pièces d'un élément de ferrure tel qu'une crémone d'une ferrure de fenêtre, porte ou analogue, placée par intermittence régulière sur un transporteur avançant pas à pas de l'installation, celle-ci comprenant, pour chaque pièce à assembler, au moins un poste d'assemblage disposé selon un plan de référence de l'élément de ferrure. Un transporteur avançant pas-à-pas comporte des moyens d'avancement formés d'un convoyeur présentant le plan longitudinal des ensembles de ferrures à assembler perpendiculairement à la ligne d'avancement du convoyeur. Ces moyens d'avancement, dont la largeur est au moins égale à la somme de la plus grande longueur possible de l'élément de ferrure et des longueurs des courses de déplacement latéral de ce dernier, sont combinés à des moyens de déplacement latéral situés entre deux postes d'assemblage ou deux ensembles de postes d'assemblage conférant à l'élément de ferrure un parcours bidirectionnel situé dans le plan horizontal dont chaque course est déterminée en fonction du plan de référence de l'élément de ferrure. Ce plan de référence est avantageusement constitué par le plan médian de l'élément de ferrure tel que le plan médian du boîtier de la crémone dont les pièces à position immuable sont essentiellement les différents éléments du boîtier tels que fouillot, pignon, pignon de renvoi, douilles et rivets d'assemblage et autres, ainsi que les pannetons et guides proches du boîtier comme décrit dans le document FR—A—2589933 publié le 15 mai 1987.

Dans cette installation, à cadence constante depuis son entrée jusqu'à sa sortie, on ne prend en considération qu'un seul plan de référence constitué par le plan médian du boîtier.

Toutefois, de nombreux éléments de ferrure, notamment les bras de compas sont dépourvus du boîtier et, de ce fait, il n'est pas possible de positionner le bras de compas selon un plan de référence constitué par le plan médian du boîtier.

Par ailleurs, pour l'assemblage des différentes pièces d'un bras de compas, il est nécessaire de prendre en considération la position du pivot autour duquel tourne l'ouvrant et la position de l'axe de rotation de la biellette reliant le bras de compas solidaire du dormant à la têtière solidaire du chant supérieur de l'ouvrant.

La présente invention a pour but de remédier à ces inconvénients. L'invention, telle qu'elle est caractérisée dans les revendications, résout le problème consistant à créer un dispositif d'assemblage par automatisme des différentes pièces d'un élément de ferrure tel qu'un bras de compas comprenant, pour chaque pièce à assembler, au moins un poste d'assemblage, un transporteur avançant pas-à-pas pourvu d'au moins un convoyeur présentant l'axe longitudinal du bras de compas perpendiculairement à la ligne d'avancement dudit transporteur et des moyens de déplacement latéral du bras de compas pour conférer à ce dernier un parcours bidirectionnel et des moyens de positionnement par rapport à des postes d'assemblage et d'usinage selon deux plans-repère du bras de compas dont l'un est constitué par le chant de l'axe fileté situé à l'une des extrémités du bras de compas sur lequel est vissé le pivot assurant la rotation de l'ouvrant de la porte, fenêtre ou analogue et, dont l'autre est constitué par le centre de l'axe d'articulation du bras secondaire reliant l'ouvrant au dormant de la porte, fenêtre ou analogue.

Les avantages obtenus grâce à cette invention consistent essentiellement en ce qu'il devient possible de remplacer l'assemblage manuel des différentes pièces disposées sur le bras de compas par un assemblage automatique à l'aide d'un dispositif mécanismé et ceci, indépendamment de la longueur du bras de compas. Par ailleurs, ce dispositif d'assemblage permet de combiner les avantages résultant d'une cadence constante de l'avancement pas-à-pas des bras de compas au cours de l'adjonction des différentes pièces de ces derniers et les avantages de la modification de la position transversale du bras de compas en fonction de la position des pièces, indépendante de la longueur du bras de compas.

L'invention est exposée ci-après plus en détail à l'aide de dessins représentant seulement un mode d'exécution.

La figure 1 représente une vue de dessous du bras de compas avant son entrée dans le dispositif d'assemblage.

La figure 2 représente une vue schématique et en plan du dispositif d'assemblage conforme à l'invention.

La figure 3 représente une vue en plan du bras de compas pourvu des différentes pièces assemblées à la sortie du dispositif d'assemblage.

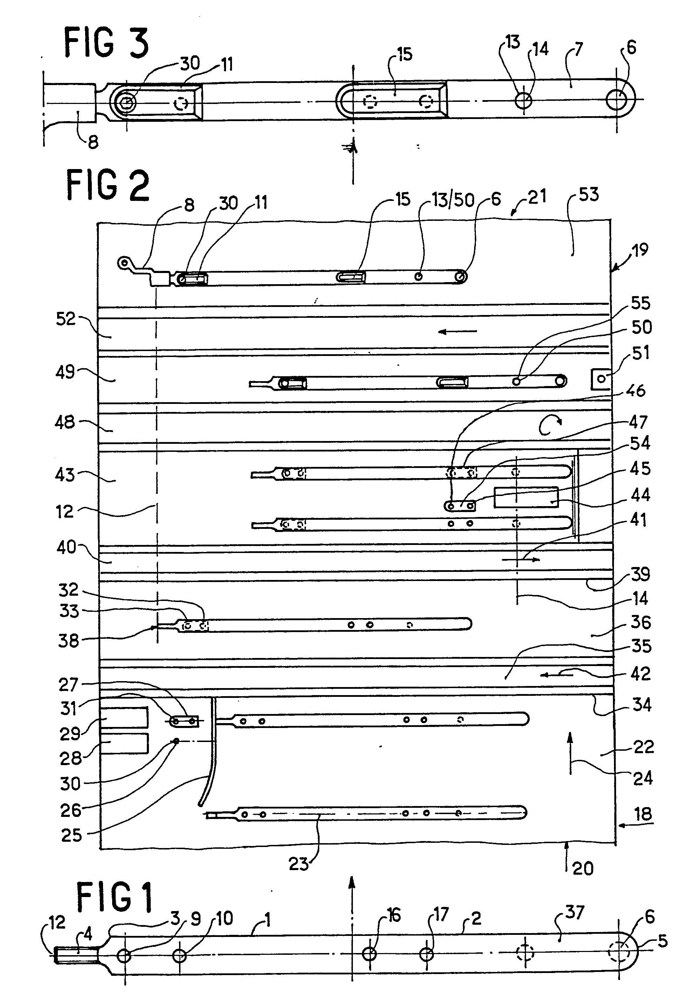

On se réfère aux figures 1 et 3.

Le bras de compas 1, permettant l'ouverture de l'ouvrant d'une porte, fenêtre ou analogue, comporte, en provenance des machines de fabrication et d'usinage situées en amont du dispositif d'assemblage, un corps longitudinal 2 dont une extrémité 3 est pourvue d'un axe fileté 4 et qui présente, à son autre extrémité 5, une articulation 6 faisant saillie par rapport à une des faces 7 du bras de compas 1.

Sur l'axe fileté 4 sera vissé un pivot 8 permettant la rotation de l'ouvrant par rapport au dormant de la porte, fenêtre ou analogue. L'articulation 6 permet de relier le bras de compas 1, solidaire du dormant, à la têtière solidaire de l'ouvrant de la porte, fenêtre ou analogue, cette têtière présentant à cet effet une rainure dans laquelle peut se déplacer longitudinalement ladite articulation 6.

Le bras de compas 1 comporte à son extrémité 3 une première paire d'orifices 9, 10 pour la mise en place d'une première rampe de verrouillage 11 dans laquelle va coulisser un élément de verrouillage faisant saillie à travers une lumière réalisée dans la têtière et actionné par une tringle de manoeuvre d'une crémone ou crémone-serrure.

La position de cette première rampe de verrouillage 11 est immuable par rapport à l'extrémité 3 du bras de compas. De ce fait, le chant 12 de l'axe fileté 4 constitue l'un des plans de repère permettant de positionner le bras de compas 1.

Par ailleurs, le bras de compas 1 comporte à une certaine distance de son extrémité 5 un axe de rotation 13 faisant également saillie par rapport à la face 7. Sur cet axe de rotation 13 est enfilée l'une des extrémités percées d'un bras secondaire reliant le dormant de la porte, fenêtre ou analogue à l'ouvrant en limitant l'ouverture de ce dernier. Le centre 14 de cet axe de rotation 13 constitue le second plan de repère permettant le positionnement du bras de compas 1 en vue de la mise en place d'une seconde rampe de verrouillage 15 pour le coulissement d'un second élément de verrouillage de la tringle de manoeuvre de la crémone ou crémone-serrure.

A cet effet, le bras de compas 1 comporte une seconde paire d'orifices 16, 17 permettant la mise en place de la seconde rampe de verrouillage 15.

On se réfère à la figure 2.

Le dispositif d'assemblage 18 comporte un transporteur 19 s'étendant depuis son entrée 20 jusqu'à sa sortie 21. Ce transporteur 19, avançant pas-à-pas, présente à son entrée 20 un premier convoyeur longitudinal 22 sur lequel on dispose les bras de compas 1 dont la configuration est celle de la figure 1. L'axe longitudinal 23 de ces bras de compas 1 est perpendiculaire à la ligne d'avancement 24 dudit premier convoyeur longitudinal 22.

Ce dernier comporte une rampe de positionnement 25 contre laquelle vient buter le chant 12 de l'axe fileté 4 du bras de compas 1. Ainsi, selon le premier plan-repère, constitué par le chant 12, est positionné le bras de compas 1 soumis à un déplacement selon la ligne d'avancement 24. Le premier convoyeur longitudinal 22 comporte deux postes d'assemblage 26, 27. Chaque poste d'assemblage 26, 27 présente un magasin de stockage 28, 29.

Du premier magasin de stockage 28, on prélève un excentrique 30 (voir figure 3) permettant de régler la position angulaire de la première rampe de verrouillage 11 par rapport au corps 2 du bras de compas 1. Cet excentrique 30 comporte un téton dirigé vers le haut. Celui-ci, après avance d'un pas, traverse un orifice 31 réalisé dans la première rampe de verrouillage 11 prélevée du second magasin de stockage 29. Cette première rampe de verrouillage 11 présente un second téton 32 identique au téton 33 de l'excentrique 30.

A la sortie 34 du premier convoyeur longitudinal 22, le bras de compas 1 est transbordé sur un premier convoyeur transversal 35 alors que la première rampe de verrouillage 11 est acheminée vers un second convoyeur longitudinal 36. On confère, par le premier convoyeur transversal 35, un déplacement latéral au bras de compas 1 en direction de la rampe de positionnement 25, de sorte que les orifices 9, 10 soient situés au-dessus des tétons 32, 33. On soulève la première rampe de verrouillage 11 pour que les tétons 32, 33 fassent saillie par rapport à la face 37 opposée à la face 7.

Puis, on présente l'ensemble, formé par le bras de compas 1 et la première rampe de verrouillage 11 pourvue de l'excentrique 30, devant un premier poste d'usinage 38 procédant au rivetage des tétons 32, 33. Ainsi, on solidarise la première rampe de verrouillage 11 de la face 7 du corps 2 du bras de compas 1.

A la sortie 39 du second convoyeur longitudinal 36, le bras de compas 1 pourvu de sa première rampe de verrouillage 11, est déposé sur un second convoyeur transversal 40 dont l'avance 41 est de sens contraire au sens de l'avance 42 du premier convoyeur transversal 35.

On positionne le bras de compas 1 en fonction du second plan-repère formé par le centre 14 de l'axe de rotation 13 pour son transfert sur un troisième convoyeur longitudinal 43. Sur ce dernier est mise en place, par un troisième poste d'assemblage 54, la seconde rampe de verrouillage 15. Celle-ci, prélevée, d'un magasin de stockage 44, comporte deux tétons 45, 46. On dispose le bras de compas 1 de sorte que la seconde paire d'orifices 16, 17 soient situés au-dessus des tétons 45, 46. On soulève la seconde rampe de verrouillage 15 pour que les tétons 45, 46 fassent saillie par rapport à la face 37 du corps 2 du bras de compas 1.

Puis, on présente l'ensemble, formé par le bras de compas 1 et les rampes de verrouillage 11, 15, devant un second poste d'usinage 47 permettant de procéder au rivetage des tétons 45, 46 pour rendre la seconde rampe de verrouillage 15 solidaire du corps 2 du bras de compas 1.

Par l'intermédiaire d'un dispositif adéquat 48, on procédé au retournement du bras de compas 1 de sorte que la face 7 du corps 2 pourvue des deux rampes de verrouillage 11, 15, de l'articulation 6 et de l'axe de rotation 13 constitue la face supérieure.

Après ce retournement, le bras de compas 1 est placé sur un quatrième convoyeur longitudinal 49 pour la mise en place sur l'axe de rotation 13 par un quatrième poste d'assemblage 55 d'un joint torique 50 prélevé d'un magasin de stockage 51.

Puis, par l'intermédiaire d'un troisième convoyeur transversal 52, on positionne le bras de compas 1 sur un cinquième convoyeur longitudinal 53 de sorte que le chant 12 revient à la position qu'il occupait sur le deuxième convoyeur longitudinal 36 pour permettre le vissage du pivot 8 sur l'axe fileté 4 du bras de compas 1. Après mise en place dudit pivot 8, le bras de compas 1, pourvu de toutes ses pièces, est pris en charge à la sortie 21 du dispositif d'assemblage 18 par un moyen quelconque.

**Revendications**

1. Dispositif d'assemblage des différentes pièces d'un élément de ferrure tel qu'un bras de compas (1) comprenant, pour chaque pièce à assembler, au moins un poste d'assemblage (26, 27, 54, 55), un transporteur avançant pas-à-pas (19) pourvu d'au moins un convoyeur (22, 36, 45, 49, 53) présentant l'axe longitudinal (23) du bras de compas (1) perpendiculairement à la ligne d'avancement (24) dudit transporteur (19) et des moyens de déplacement latéral (35, 40, 48, 52) du bras de compas (1) pour conférer à ce dernier un parcours bidirectionnel, il comporte des moyens de positionnement (35, 40, 48, 52) par rapport à des postes d'assemblage (26, 27, 54, 55) et d'usinage (38, 47) selon deux plans-repère (12, 14) du bras de compas (1), dont l'un est constitué par le chant (12) de l'axe fileté (4) situé à l'une des extrémités (3) du bras de compas (1) sur lequel est vissé le pivot (8) assurant la rotation de l'ouvrant de la porte, fenêtre ou analogue et, dont l'autre est constitué par le centre (14) de l'axe d'articulation (13) du bras secondaire reliant l'ouvrant au dormant de la porte, fenêtre ou analogue.

2. Dispositif selon la revendication 1, caractérisé en ce que les moyens de positionnement (35, 52) sont des convoyeurs transversaux positionnant le bras de compas (1) selon le premier plan-repère (12) pour la mise en place d'une première rampe de verrouillage (11) et du pivot (8), l'avance (42) étant de même sens perpendiculaire à la ligne d'avancement (24) du dispositif d'assemblage (18).

3. Dispositif selon la revendication 1, caractérisé en ce que les moyens de positionnement (40) sont un convoyeur transversal positionnant le bras de compas (1) selon le second plan de repère (14) pour la mise en place d'une seconde rampe de verrouillage (15), l'avance (41) étant de sens contraire à l'avance (42) des convoyeurs transversaux (35, 42).

4. Dispositif selon la revendication 1, caractérisé en ce que les moyens de positionnement sont un dispositif de retournement (48) pour disposer vers le haut la face (7) pourvue des rampes de verrouillage (11, 15) du corps (2) du bras de compas (1).

5. Dispositif selon la revendication 1, caractérisé en ce qu'il comporte cinq convoyeurs longitudinaux (22, 36, 43, 49, 52) entrecoupés par les moyens de positionnement (35, 40, 48, 52) dont:

le premier convoyeur longitudinal (22), pourvu d'une rampe de positionnement (25), comporte un poste d'assemblage (26) pour la mise en place de l'excentrique (30) prélevé dans un magasin de stockage (28) et un poste d'assemblage (27) pour la mise en place de la première rampe de verrouillage (11), prélevée d'un magasin de stockage (29) sur l'excentrique (30),

le second convoyeur longitudinal (36) comporte un poste d'usinage (38) pour la fixation, par rivetage, de la première rampe de verrouillage (11) sur le bras de compas (1),

le troisième convoyeur longitudinal (43) comporte un poste d'assemblage (54) pour la mise en place de la seconde rampe de verrouillage (15), prélevée d'un magasin de stockage (44) et un second poste d'usinage (47) pour la fixation, par rivetage, de la seconde rampe de verrouillage (15) sur le bras de compas (1),

le quatrième convoyeur longitudinal (49) comporte un poste d'assemblage (55) pour coiffer l'axe de rotation (13) d'un joint torique (50) prélevé d'un magasin de stockage (51).

**Patentansprüche**

1. Vorrichtung zum Zusammenbauen der verschiedenen Teile eines Beschlagelementes, wie eines Scherenarmes (1), die für jeden zusammenzubauenden Teil zumindest eine Zusammenbaustation (26, 27, 54, 55), eine Transporteinrichtung (19) mit Schrittvorschub, die mit zumindest einem Förderer (22, 36, 45, 49, 53) versehen ist, auf welchem die Längsachse (23) des Scherenarmes (1) senkrecht zur Vorschublinie (24) der Transporteinrichtung (19) verläuft, und Mittel (35, 40, 48, 52) zur seitlichen Verlagerung des Scherenarmes (1) aufweist, um dem letzteren einen Weg in zwei Richtungen zu erteilen, dadurch gekennzeichnet, daß sie Mittel (35, 40, 48, 52) zum Positionieren des Scherenarmes (1) bezüglich der Zusammenbaustationen (26, 27, 54, 55) und bezüglich Bearbeitungsstationen (38, 47) nach zwei Bezugsebenen (12, 14) aufweist, von denen eine durch die Kante (12) einer an einem der Enden (3) des Scherenarmes (1) angeordneten Gewindeachse (4) gebildet ist, auf welche ein Drehteil (8) aufgeschraubt wird, welcher die Drehung des Flügels der Tür, des Fensters od. dgl. bewirkt, und die andere durch die Mitte (14) der Gelenkachse (13) des Sekundärarmes gebildet ist, welcher den Flügel mit dem Stockrahmen der Tür, des Fensters od. dgl. verbindet.

2. Vorrichtung nach Anspruch 1, dadurch gekennzeichnet, daß die Positioniermittel (35, 52) Querförderer sind, welche den Scherenarm (1) entsprechend der ersten Bezugsebene (12) zum Aufbringen einer ersten Verriegelungsrampe (11) und des Drehteiles (8) positioniert, wobei der Vorschub (42) in der gleichen Richtung senkrecht zur Vorschublinie (24) der Zusammenbauvorrichtung (18) verläuft.

3. Vorrichtung nach Anspruch 1, dadurch gekennzeichnet, daß die Positioniermittel (40) durch einen Querförderer gebildet sind, welcher dne Scherenarm (1) entsprechend der zweiten Bezugsebene (14) zum Aufbringen einer zweiten Verriegelungsrampe (15) positioniert, wobei der Vorschub (41) gegensinnig zum Vorschub (42) der Querförderer (35, 42) verläuft.

4. Vorrichtung nach Anspruch 1, dadurch gekennzeichnet, daß die Positioniermittel durch eine Rückstellvorrichtung (48) gebildet sind, um die mit den Verriegelungsrampen (11, 15) versehene Seite (7) des Körpers (2) des Scherenarmes (1) nach oben zu kehren.

5. Vorrichtung nach Anspruch 1, dadurch gekennzeichnet, daß sie fünf Längsförderer (22, 36, 43, 49, 52) aufweist, die von den Positioniermitteln (35, 40, 48, 52) durchsetzt werden, wobei:

der erste Längsförderer (22), der mit einer Positionierrampe (25) versehen ist, eine Zusammenbaustation (26) für die Anordnung eines aus einem Vorratsmagazin (28) entnommenen Exzenters (30) und eine Zusammenbaustation (27) für das Aufbringen der aus einem Vorratsmagazin (29) entnommenen ersten Verriegelungsrampe (11) auf den Exzenter (30) aufweist,

der zweite Längsförderer (36) zumindest eine Bearbeitungstation (38) zur Befestigung der ersten Verriegelungsrampe (11) am Scherenarm (1) durch Vernieten aufweist,

der dritte Längsförderer (43) eine Zusammenbaustation (54) für das Aufbringen der aus einem Vorratsmagazin (44) entnommenen zweiten Verriegelungsrampe (15) und eine zweite Bearbeitungsstation (47) zur Befestigung der zweiten Verriegelungsrampe (15) am Scherenarm (1) durch Vernieten aufweist,

der vierte Längsförderer (49) eine Zusammenbaustation (55) aufweist, um die Drehachse (13) mit einer aus einem Vorratsmagazin (51) entnommenen Ringdichtung (50) zu umgeben.

## Claims

1. Device for assembling the various parts of a small ironwork element, such as a folding arm leg (1), comprising, for each part to be assembled, at least one assembling station (26, 27, 54, 55), a stepping conveyor (19) provided with at least one conveying belt (22, 36, 45, 49, 53) presenting the longitudinal axis (23) of the folding arm leg (1) perpendicular to the feed line (24) of said conveyor (19) and side movement means (35, 40, 48, 52) for the folding arm leg (1), to confer to same a bidirectional path, characterized in that it comprises means for positioning (35, 40, 48, 52) with respect to assembling stations (26, 27, 54, 55) and for machining (38, 47) in two reference planes (12, 14) of the folding arm leg (1), one of which being formed by the edge (12) of the threaded spindle (4) located at one end (3) of the folding arm leg (1) onto which is screwed the pivot (8) ensuring the rotation of the leaf of the door, window or the like and, the other one of which is formed by the centre (14) of the hinging spindle (13) of the secondary arm connecting the leaf to the sashframe of the door, window or the like.

2. Device according to Claim 1, characterized in that the positioning means (35, 52) are transversal conveying belts positioning the folding arm leg (1) in a first reference plane (12) for the positioning of a first locking ramp (11) and the pivot (8), the feed (42) being in the same direction perpendicular to the feed line (24) of the assembling device (18).

3. Device according to Claim 1, characterized in that the positioning means (40) are a transversal conveying belt positioning the folding arm leg (1) in a second reference plane (14) for positioning a second locking ramp (15), the feed (41) being in the direction opposite to the feed (42) of the transversal conveying belts (35, 52).

4. Device according to Claim 1, characterized in that the positioning means are a reversing device (48) for arranging upwards the face (7) provided with the locking ramps (11, 15) of the body (2) of the folding arm leg (1).

5. Device according to Claim 1, characterized in that it comprises five longitudinal conveying belts (22, 36, 43, 49, 52) intersected by the positioning means (35, 40, 48, 52), of which:

the first longitudinal conveying belt (22), provided with a positioning ramp (25), comprises an assembling station (26) for the positioning of the eccenter (30) taken off a storage container (28) and an assembling station (27) for the positioning of the first locking ramp (11), taken off a storage container (29), onto the eccenter (30),

the second longitudinal conveying belt (36) comprises a machining station (38) for the fixing, by rivetting, of the first locking ramp (11) onto the folding arm leg (1),

the third longitudinal conveying belt (43) comprises a machining station (54) for the positioning of the second locking ramp (15), taken off of storage container (44) and a second machining station (47) for the fixing, by rivetting, of the second locking ramp (11) onto the folding arm leg (1),

the fourth longitudinal conveying belt (49) comprises a machining station (55) for capping the rotation spindle (13) with an O-ring (50) taken off a storage container (51).

FIG 3

FIG 2

FIG 1